(19) Europäisches Patentamt
European Patent Office
Office européen des brevets

(11) Veröffentlichungsnummer: **0 002 013**
**B1**

(12) **EUROPÄISCHE PATENTSCHRIFT**

(21) Anmeldenummer: **78101305.7**

(22) Anmeldetag: **04.11.78**

(51) Int. Cl.³: **A 01 N 33/00,**
C 07 C 121/00

# (54) Mittel zur Regulierung des Pflanzenwachstums, deren Herstellung sowie die Verwendung von alpha-Isocyanocarbonsäurederivaten zur Regulierung des Pflanzenwachstums

(30) Priorität: **19.11.77 DE 2751782**

(43) Veröffentlichungstag der Anmeldung:
**30.05.79 Patentblatt 79/11**

(45) Bekanntmachung des Hinweises auf die Patenterteilung:
**06.08.80 Patentblatt 80/16**

(84) Benannte Vertragsstaaten:
**BE CH DE FR GB NL SE**

(56) Entgegenhaltungen:
**DE - A - 2 043 666**
**FR - A - 1 216 998**
**FR - A - 2 013 975**

(73) Patentinhaber: **Bayer AG**
**Zentralbereich Patente, Marken und Lizenzen**
**D - 5090 Leverkusen 1, Bayerwerk (DE)**

(72) Erfinder: **Schröder, Rolf, Dr.**
**Pahlkestrasse 17**
**D - 5600 Wuppertal 1 (DE)**
**Lürssen, Klaus, Dr.**
**August-Kierspel-Strasse 89**
**D - 5060 Berg. Gladbach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 002 013 B1

Mittel zur Regulierung des Pflanzenwachstums, deren Herstellung sowie die Verwendung von $\alpha$-Isocyanocarbonsäurederivaten zur Regulierung des Pflanzenwachstums

Die vorliegende Erfindung betrifft pflanzenwachsregulierende Mittel auf Basis von teilweise bekannten $\alpha$-Isocyanocarbonsäurederivaten, die Herstellung dieser Mittel sowie die Verwendung von teilweise bekannten $\alpha$-Isocyanocarbonsäurederivaten zur Regulierung des Pflanzenwachstums.

Die Verwendung von $\alpha$-Isocyanocarbonsäurederivaten als Zwischenprodukte in der pharmazeutischen Industrie, z.B. bei der Herstellung von Aminosäuren, ist bekannt (vgl. Deutsche Offenlengungsschrift 2 063 502 und japanische Patentschrift 4043—936/1970).

Weiterhin ist bereits bekannt geworden, daß Trithiophosphorsäure-S,S,S-trialkylester, wie beispielweise Trithiophosphorsäure-S,S,S-tri-n-butylester, pflanzenwachstumsregulierende Eigenschaften besitzen (vgl. US—Patentschriften 2 841 486 und 2 965 467). Solche Verbindungen können z.B. als Wirkstoffe zum Entblättern von Baumwolle, verwendet werden. Ihre Wirkung ist jedoch, vor allem bei niedrigen Wirkstoffkonzentrationen und -aufwendungen, nicht immer ganz befriedigend.

Ebenso ist bereits bekannt, daß 2-Halogenethansulfinsäuren, beispielsweise 2-Chlorethansulfinsäure, und ihre Derivate als Pflanzenwachstumsregulatoren verwendet werden können (vergleiche deutsche Offenlegungsschrift 2 110 773). Auch ihre Wirkung ist jedoch vor allem bei niedrigen Aufwandmengen nicht immer ganz befriedigend.

Ferner ist bekannt, daß "Off-Shoot-T(R)", ein im Handel befindliches Produkt auf Basis von Fettalkoholen mit 6,8,10 und 12 Kohlenstoffatomen pflanzenwachstumsregulierende Wirkung zeigt (vgl. Farm. Chem. Handbook 1975, Meister Publishing Co., Willoughby, Ohio 1975; Pesticide Dictionary D 147). Die Wirkung ist jedoch, vor allem bei niedrigen Wirkstoffkonzentrationen und -aufwandmengen, ebenfalls nicht immer ganz befriedigend.

Es wurde nun gefunden, daß die teilweise bekannten $\alpha$-Isocyanocarbonsäurederivate der Formel

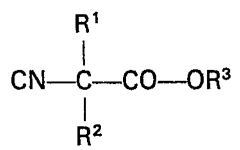

(I)

in welcher

$R^1$ und $R^2$ welche gleich oder verschieden sein können für Wasserstoff, Alkyl mit 1 bis 6 Kohlenstoffatomen, Alkenyl mit 2 bis 4 Kohlenstoffatomen, Aryl mit 6 oder 10 Kohlenstoffatomen, Aralkyl mit 6 oder 10 Kohlenstoffatomen im Arylteil und 1 bis 4 Kohlenstoffatomen in Alkylteil, oder für Carbalkoxy mit 1 bis 4 Kohlenstoffatomen im Alkoxyteil stehen oder

$R^1$ und $R^2$ gemeinsam für eine Alkylenkette mit 2 bis 7 Kohlenstoffatomen stehen und

$R^3$ für Wasserstoff, Alkyl mit 1 bis 20 Kohlenstoffatomen, Aryl mit 6 oder 10 Kohlenstoffatom, Aralkyl mit 6 oder 10 Kohlenstoffatomen im Arylteil und 1 bis 4 Kohlenstoffatomen im Alkylteil, oder Carbalkoxyalkyl mit 1 bis 4 Kohlenstoffatomen in der Oxyalkylgruppe steht und weiterhin,—wenn $R^1$ und $R^2$ Wasserstoffbedeuten—für eine Natrium- oder Kaliumion steht,

starke pflanzenwachstumsregulierende Eigenschaften aufweisen.

Außerdem besitzen einige der erfindungsgemäß verwendbaren Verbindungen eine herbizide Wirksamkeit.

Überraschenderweise zeigen die erfindungsgemäß verwendbaren $\alpha$-Isocyanocarbonsäurederivate der Formel (I) eine erheblich höhere pflanzenwuchsregulierende Wirkung als die aus dem Stand der Technik bekannten Stoffe Trithiophosphorsäure-S,S,S-tri-n-butylester, 2-Chlorethansulfinsäure und Off-Shoot-T(R), welche hochaktive Wirkstoffe gleicher Wirkungsart sind. Die erfindungsgemäß verwendbaren Stoffe stellen somit ein wertvolle Bereicherung der Technik dar.

Die erfindungsgemäß zu verwenden Isocyanocarbonsäurederivate sind durch die Formel (I) allgemein definiert. In der Formel (I) stehen bevorsugt

$R^1$ und $R^2$, welche gleich oder verschieden sein können, für Wasserstoff, geradkettiges oder verzweigtes Alkyl mit 1 bis 4 Kohlenstoffatomen, Allyl, ferner für Aryl mit 6 oder 10 Kohlenstoffatomen, Aralkyl mit 6 oder 10 Kohlenstoffatomen im Arylteil und 1 bis 4 Kohlenstoffatomen im Alkylteil, außerdem für Carbomethoxy und Carbethoxy und weiterhin.

$R^1$ und $R^2$ gemeinsam für eine Alkylenkette mit 2 bis 5 Kohlenstoffatomen und

$R^3$ für Wasserstoff, geradkettiges oder verzweigtes Alkyl mit 1 bis 16 Kohlenstoffatomen, Aryl mit 6 oder 10 Kohlenstoffatomen, Aralkyl mit 6 oder 10 Kohlenstoffatomen im Arylteil und 1 bis 4 Kohlenstoffatomen im Alkylteil, ferner für Carbalkoxyalkyl mit 1 bis 4 Kohlenstoffatomen in der Oxyalkylgruppe und weiterhin,—wenn $R^1$ und $R^2$ für Wasserstoff stehen—, für ein Natrium- oder Kaliumion.

Als Beispiele für Verbindungen der Formel (I) seinen im einzelnen genannt:

$\alpha$-Isocyano-essigsäure, -propionsäure, -buttersäure, -valeriansäure, -capronsäure, $\alpha$ - Isocyano - $\alpha$ - methylpropionsäure und - buttersäure, $\alpha$ - Isocyano - $\alpha$ - ethylbuttersäure, $\alpha$ - Isocyano - $\alpha$ - methyl-, $\alpha$ - ethyl-, $\alpha$ - n - propyl- und $\alpha$ - iso - propyl - valeriansäure, $\alpha$ - Isocyano - $\alpha$ - methyl-,

- $\alpha$ - ethyl-, - $\alpha$ - n - propyl-, - $\alpha$ - isopropyl-, - $\alpha$ - n - butyl-, - $\alpha$ - isobutyl-, - $\alpha$ - sek.- butyl- und - $\alpha$ - tert. - butylcapronsäure, $\alpha$ - Isocyano - $\alpha$ - benzylpropionsäure, 1 - Isocyano - 1 - cyclopropan - carbonsäure, $\alpha$ - Isocyano - $\alpha$ - allyl - propionsäure, $\alpha$ - Isocyano - $\beta$ - methyl - buttersäure, $\alpha$ - isocyano - $\alpha,\beta$ - dimethyl - buttersäure, $\alpha$ - Isocyano- $\alpha$ - carbomethoxymethyl- und $\alpha$ - Isocyano - $\alpha$ - carbethoxymethylpropionsäure, ferner die entsprechenden.

Methyl-, Äthyl-, n-Propyl-, Isopropyl-, n-Butyl-, Isobutyl-, sek.-Butyl-, tert.-Butyl-, n-Pentyl-, n-Hexyl, n-Octyl-, n-Nonyl-, n-Decyl-, n-Dodecyl-, Tetradecyl-, Benzyl-, Carbomethoxymethyl- oder Carbäthoxymethylester und das Natrium- und Kaliumsalz der $\alpha$-Isocyanoessigsäure.

Die erfindungsgemäß verwendbaren Isocyanocarbonsäurederivate der Formel (I) sind teilweise bekannt [vergleiche Chem. Ber. *109*, (1976), S. 482 ff; J. Org. Chem. 30 (1965), S. 1905—7; Deutsche Offenlegungsschrift 2 063 502; japanische Patentschrift 4043—936/1970; Liebigs Ann. Chem. 1973, S. 611—18; japanische Patentschriften 0121 245/1975; 4027—860/1970; 9066—649/1974; Deutsche Offenlegungsschrift 1 962 898; Tetrahedron Lett. 1969, S. 5091—4; Chem. Commun. 1969, S. 811—2; Angew. Chem. 83 (1971), S. 357—8; Bull. Chem. Soc. Jap. 44, (1971) S. 1407—10]. Einzelne der erfindungsgemäßen Wirkstoffe sind neu, sie können jedoch nach bekannten Verfahren in einfacher Weise hergestellt werden.

Man erhält z.B. die Salze der $\alpha$-Isocyanoessigsäure durch Umsetzung von Isocyanoessigsäureestern der Formel

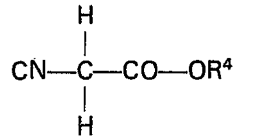

(II)

worin

$R^4$ Methyl oder Äthyl bedeutet, mit Alkalihydroxiden, wie Natrium- oder Kaliumhydroxid bei Temperaturen zwischen 0°C und 20°C in Gegenwart eines Lösungs- oder Verdünnungsmittels und anschließender Filtration.

Die Ester der $\alpha$-Isocyano-carbonsäuren mit längerkettigen Alkoholen erhält man z.B., wenn man Methyl- oder Äthylester der entsprechenden Säuren in Gegenwart einer Base und eines Lösungsmittels mit den betreffenden Alkoholen bei Temperaturen zwischen 0°C und 150°C umsetzt.

Die als Ausgangsstoffe benötigten Methyl- und Äthylester der $\alpha$-Isocyanocarbonsäuren sind bekannt oder lassen sich nach im Prinzip bekannten Verfahren herstellen (vgl. Angew. Chemie *77*, (1965) S. 492 und Chem. Ber. *108*, (1975), S. 1580).

Die erfindungsgemäß verwendbaren Wirkstoffe greifen in den Metabolismus der Pflanzen ein und können deshalb als Wachstumsregulatoren eingesetzt werden.

Für die Wirkungsweise von Pflanzenwachstumsregulatoren gilt nach der bisherigen Erfahrung, daß ein Wirkstoff eine oder auch mehrere verschiedenartige Wirkungen auf Pflanzen ausüben kann. Die Wirkungen der Stoffe hängen im wesentlichen ab von dem Zeitpunkt der Anwendung, bezogen auf das Entwicklungsstadium des Samens oder der Pflanze sowie von den auf die Pflanzen oder ihre Umgebung ausgebrachten Wirkstoffmengen und von der Art der Applikation. In jedem Fall sollen Wachstumsregulatoren die Kulturpflanzen in gewünschter Weise positiv beeinflussen.

Pflanzenwuchsregulierende Stoffe können zum Beispiel zur Hemmung des vegetativen Pflanzenwachstums eingesetzt werden. Eine derartige Wuchshemmung ist unter anderem bei Gräsern von wirtschaftlichem Interesse, denn durch eine Dämpfung des Graswachstums kann z.B. die Häufigkeit der Grasschnitte in Ziergärten, Parkund Sportanlagen oder an Straßenrädern reduziert werden. Von Bedeutung ist auch die Hummung des Wuchses von krautigen und holzigen Pflanzen an Straßenrändern und in der Nähe von Überlandleitungen oder ganz allgemein in Bereichen, in denen ein starker Bewuchs unerwünscht ist.

Wichtig ist auch die Anwendung von Wachstumsregulatoren zur Hemmung des Längenwachstums bei Getreide, denn durch eine Halmverkürzung wird die Gefahr des Umknickens ("Lagerns") der Pflanzen vor der Ernte verringert oder vollkommen beseitigt. Außerdem können Wachstumsregulatoren bei Getreide eine Halmverstärkung hervorrufen, die ebenfalls dem Lagern entgegenwirkt.

Eine Hemmung des vegetativen Wachstums erlaubt bei vielen Kulturpflanzen eine dichtere Anpflanzung der Kultur, so daß ein Mehrertrag bezogen auf die Bodenfläche erzielt werden kann.

Ein weiterer Mechanismus der Ertragssteigerung mit Wuchshemmern beruht darauf, daß die Nährstoffe in stärkerem Maße der Blüten- und Fruchtbildung zugute kommen, während das vegetative Wachstum eingeschränkt wird.

Mit Wachstumstegulatoren läßt sich häufig auch eine Förderung des vegetativen Wachstums erzielen. Dies ist von großem Nutzen, wenn die vegetativen Pflanzenteile geerntet werden. Eine Förderung des vegetativen Wachstums kann aber auch gleichzeitig zu einer Förderung des generativen Wachstums führen, so daß z.B. mehr oder größere Früchte zur Ausbildung kommen.

Ertragssteigerungen können in manchen Fällen auch durch einen Eingriff in den pflanzlichen Stoffwechsel erreicht werden, ohne daß sich Änderungen des vegetativen Wachstums bemerkbar machen. Wachstumsregulatoren können ferner einer Veränderung der Zusammensetzung der Pflanzen

bewirken, um so eine bessere Qualität der Ernteprodukte herbeizufüren. So ist es beispielsweise möglich, den Gehalt an Zucker in Zuckerrüben, Zuckerrohr, Ananas sowie Zitrusfrüchten zu erhöhen oder den Proteingehalt in Soja oder Getreide zu steigern.

Unter dem Einfluß von Wachstumsregulatoren kann es zur Ausbildung parthenokarper Früchte kommen. Ferner kann das Geschlecht der Blüten beeinflußt werden.

Mit Wachstumsregulatoren läßt sich auch die Produktion oder der Abfluß von sekundären Pflanzenstoffen positiv beeinflussen. Als Beispiel sei die Stimulierung des Latexflusses bei Gummibäumen genannt.

Während des Wachstums der Pflanze kann durch Einsatz von Wachstumsregulatoren auch die seitliche Verzweigung durch eine chemische brechung der Apikaldominanz vermehrt werden. Daran besteht z.B. Interesse bei der Stecklingsvermehrung von Pflanzen. Es ist jedoch auch möglich, das Wachstum der Seitentriebe zu hemmen, z.B. um bei Tabakpflanzen nach der Dekapitierung die Ausbildung von Seitentrieben zu verhindern und damit das Blattwachstum zu fördern.

Unter dem Einfluß von Wachstumsregulatoren kann der Blattbestand von Pflanzen so gesteuert werden, daß ein Entblättern der Pflanzen zu einem gewünschten Zeitpunkt erreicht wird. Eine derartige Entlaubung ist von Interesse, um eine mechanische Beerntung, z.B. bei Wein oder Baumwolle, zu erleichtern oder um die Transpiration zu einem Zeitpunkt herabzusetzen, an dem die Pflanze verpflanzt werden soll.

Durch Einsatz von Wachstumsregulatoren läßt sich der vorzeitige Fruchtfall verhindern. Es ist jedoch auch möglich, den Fruchtfall,—zum Beispiel bei Obst—, im Sinne einer chemischen Ausdünnung bis zu einem bestimmten Ausmaß zu fördern. Wachstumsregulatoren können auch dazu dienen, um bei Kulturpflanzen zum Zeitpunkt der Ernte die zum Ablösen der Früchte erforderliche Kraft zu vermindern, so daß eine mechanische Beerntung der Pflanzen ermöglicht beziehungsweise eine manuelle Beerntung erleichtert wird.

Mit Wachstumsregulatoren läßt sich ferner eine Beschleunigung oder auch eine Verzögerung der Reife des Erntegutes vor oder nach der Ernte erreichen. Dieses ist von besonderem Vorteil, weil sich dadurch eine optimale Anpassung an die Bedürfnisse des Marktes herbeiführen läßt. Weiterhin können Wachstumsregulatoren in manchen Fällen die Fruchtausfärbung verbessern. Darüberhinaus kann mit Hilfe von Wachstumsregulatoren auch eine zeitliche Konzentrierung der Reife erzielt werden. Damit werden die Voraussetzungen dafür geschaffen, daß z.B. bei Tabak, Tomaten oder Kaffee, eine vollständige mechanische oder manuelle Beerntung in nur einem Arbeitsgang vorgenommen werden kann.

Durch Anwendung von Wachstumsregulatoren kann auch die Samen- oder Knospenruhe der Pflanzen, also die endogene Jahresrhythmik, beeinflußt werden, so daß die Pflanzen, wie z.B. Ananas oder Zierpflanzen in Gärtnereien, zu einem Zeitpunkt keimen, austreiben oder blühen, an dem sie normalerweise hierzu keine Bereitschaft zeigen.

Mit Wachstumsregulatoren kann auch erreicht werden, daß der Austrieb von Knospen oder die Keimung von Samen verzögert wird, z.B. um in frostgefährdeten Gebieten eine Schädigung durch Spätfröste zu vermeiden.

Wachstumsregulatoren können auch eine Halophilie bei Kulturpflanzen erzeugen. Damit werden die Voraussetzungen dafür geschaffen, daß eine Kultivierung von Pflanzen auf salzhaltigen Böden durchgeführt werden kann.

Mit Wachstumsregulatoren kann auch eine Frost- und Trockenresistenz bei Pflanzen induziert werden.

Die Wirkstoffe können in die üblichen Formulierungen übergeführt werden, wie Lösungen, Emulsionen, Spritzpulver, Suspensionen, Pulver, Stäubemittel, Schäume, Pasten, lösliche Pulver, Granulate, Aerosole, Suspensions-Emulsionskonzentrate, Saatgutpuder, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä. sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und-oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen infrage; Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z.B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.b. Aerosol-Treibgas, wie Halogenkohlenwasserstoffe sowie Butan, Propan, Stickstoff und Kohlendioxid; als feste Trägerstoffe: natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als fest Trägerstoffe

für Granulate: gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehle, Kokosnußschalen, Maiskolben und Tabakstengel; als Emulgier- und/oder schaumerzeugende Mittel; nichtionogene und anionische Emulgatoren, wie Polyoxyäthylen-Fettsäure-Ester, Polyoxyäthylen-Fettalkohol-Ather, z.B. Alkylaryl-polyglykol-äther, Alkylsulfonate, Alkylsulfate, Arylsulfonate sowie Eiweißhydrolysate; als Dispergiermittel: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinyl-alkohol, Polyvinylacetat.

Es können Farbstoffe wie anorganische Pigmente, z.B. Eisenoxid, Titanoxid, Ferrocyanblau und organische Farbstoffe, wei Alizaren-, Azo-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90%.

Di erfindungsgemäßen Wirkstoffe können in den Formulierungen in Mischung mit anderen bekannten Wirkstoffen vorliegen, wie Fungizide, Insektizide; Akarizide und Herbizide, sowie in Mischung mit Düngemitteln und anderen Wachstumsregulatoren.

Die Wirkstoffe können als solche, in Form ihrer Formulierungen oder der daraus bereiteten Anwendungsformen, wie gebrauchsfertige Lösungen, emulgierbare Konzentrate, Emulsionen, Schäume, Suspensionen, Spritzpulver, Pasten, lösliche Pulver, Stäubemittel und Granulate, angewendet werden. Die Anwendung geschieht in üblicher Weise, z.B. durch Gießen, Verspritzen, Versprühen, Verstreuen, Verstäuben, Verschäumen, Begasen usw.. Es ist ferner möglich, die Wirkstoffe nach dem Ultra-Low-Volume-Verfahren auszubringen, Pflanzen oder Pflanzenteile mit der Wirkstoffzubereitung oder dem Wirkstoff selbst zu bestreichen oder die Wirkstoffzubereitung oder den Wirkstoff selbst in den Boden zu injizieren. Es kann auch das Saatgut der Pflanze behandelt werden.

Die Wirstoffkonzentrationen können in einem größeren Bereich variiert werden. Im allgemeinen verwendet man pro Hektar Bodenfläche 0,01 bis 50 kg, bevorzugt 0,05 bis 10 kg an Wirkstoff.

Für die Anwendungszeit gilt, daß die Anwendung der Wachstumstegulatoren in einem bevorzugten Zeitraum vorgenommen wird, dessen genaue Abgrenzung sich nach den klimatischen und vegetativen Gegebenheiten richtet.

In den nachfolgenden Beispielen wird die Aktivität der erfindungsgemäßen Stoffe als Wachstumsregulatoren dargestellt, ohne damit die Möglichkeit weiterer Anwendungen als Wachstumsregulatoren auszuschließen.

In den nachfolgenden Beispielen werden die nachstehend angegebenen Verbindungen als Vergleichssubstanzen eingesetzt:

A = $(CH_3—CH_2—CH_2—CH_2—S)_3PO$
(Tri-n-butyl-trithiophosphorsäureester)

B = 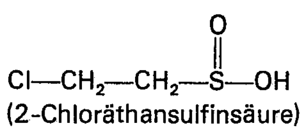
(2-Chloräthansulfinsäure)

C = Off-Shoot-T®
( = Pflanzenwachstumsregulator auf Basis von Fettalkoholen mit 6, 8, 10 und 12 Kohlenstoffatomen).

Beispiel A

*Entlaubung von Baumwollpflanzen bzw. Austrocknen der Blätter bei Baumwolle*

| | | |
|---|---|---|
| Lösungsmittel: | 30 Gewichtsteile | Dimethylformamid |
| Emulgator: | 1 Gewichtsteil | Polyoxyäthylen-Sorbitan-Monolaurat |

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Baumwollpflanzen werden im Gewächshaus bis zur vollen. Entfaltung des 5. Laubblattes angezogen. In diesem Stadium werden die faltung des 5. Laubblattes angezogen. In diesem Stadium werden die Pflanzen tropfnaß mit den Wirkstoffzubereitungen besprüht. Nach 1 Woche werden der Blattfall und die Austrocknung der Blätter bonitiert. Die Ergebnisse werden mit denen der unbehandelten Kontrollpflanzen verglichen.

Der erfindungsgemäße Wirkstoff 1 verursacht in diesem Test einen wesentlich stärkeren Blattfall

und eine stärkere Austrocknung der Blätter als die aus dem Stand der Technik bekannte Substanz A.

Beispiel B

*Hemmung des Seitentriebwachstums bei Tabak*

| | | |
|---|---|---|
| Lösungsmittel: | 30 Gewichtsteile | Dimethylformamid |
| Emulgator: | 1 Gewichtsteil | Polyoxyäthylen-Sorbitan-Monolaurat |

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Tabakpflanzen werden im Gewächshaus bis zur Entfaltung des 7. Laubblattes angezogen. In diesem Stadium werden die apikalen Vegetationsspitzen der Pflanzen entfernt und die Pflanzen tropfnaß mit den Wirkstoffzubereitungen besprüht. Nach 3 Wochen werden die Seitentriebe der Pflanzen herausgebrochen und gewogen. Das Gewicht der Seitentriebe der behandelten Pflanzen wird mit dem der unbehandelten Kontrollpflanzen verglichen.

Der erfindungsgemäße Wirkstoff 1 verursacht in diesem Test eine wesentlich bessere Hemmung des Seitentriebwachstums als die aus dem Stand der Technik bekannte Substanz C.

Beispiel C

*Wuchshemmung bei Sojabohnen*

| | | |
|---|---|---|
| Lösungsmittel: | 30 Gewichtsteile | Dimethylformamid |
| Emulgator: | 1 Gewichtsteil | Polyoxyäthylen-Sorbitan-Monolaurat |

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Sojabohnenpflanzen werden im Gewächshaus bis zur vollen Entfaltung des ersten Folgeblattes angezogen. In diesem Stadium werden die Pflanzen tropfnaß mit den Wirkstoffzubereitungen besprüht. Nach 3 Wochen wird der Zuwachs der behandelten Pflanzen mit dem Zuwachs der unbehandelten Kontrollpflanzen verglichen.

Die erfindungsgemäßen Wirkstoffe 4, 5, 6, 11, 23, 25, 26 und 32 verursachen in diesem Test eine wesentlich stärkere Wuchshemmung als die aus dem Stand der Technik bekannte Substanz B.

Beispiel D

*Wuchshemmung bei Baumwolle*

| | | |
|---|---|---|
| Lösungsmittel: | 30 Gewichtsteile | Dimethylformamid |
| Emulgator: | 1 Gewichtsteil | Polyoxyäthylen-Sorbitan-Monolaurat |

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Baumwollpflanzen werden im Gewächshaus bis zur vollen Entfaltung des 5. Laubblattes angezogen. In diesem Stadium werden die Pflanzen tropfnaß mit den Wirkstoffzubereitungen besprüht. Nach 3 Wochen wird der Zuwachs der behandelten Pflanzen dem Zuwachs der unbehandelten Kontrollpflanzen verglichen.

Die erfindungsgemäßen Wirkstoffe 1, 4, 5 und 12 verursachen in diesem Test eine wesentlich stärkere Wuchshemmung als die aus dem Stand der Technik bekannte Substanz B.

Beispiel E

*Wuchshemmung bei Weizen*

| | | |
|---|---|---|
| Lösungsmittel: | 30 Gewichtsteile | Dimethylformamid |
| Emulgator: | 1 Gewichtsteil | Polyoxyäthylen-Sorbitan-Monolaurat |

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Weizenpflanzen werden im Gewächshaus bis zum 2-Blatt-Stadium angezogen, in diesem Stadium werden die Pflanzen tropfnaß mit den Wirkstoffzubereitungen besprüht. Nach 3 Wochen wird der Zuwachs der behandelten Pflanzen mit dem Zuwachs der unbehandelten Kontrollpflanzen verglichen.

Die erfindungsgemäßen Wirkstoffe 1, 5 und 8 verursachen in diesem Test eine wesentlich stärkere Wuchshemmung als die aus dem Stand der Technik bekannte Substanz B.

Beispiel F

*Wuchshemmung bei Gerste*

| | | |
|---|---|---|
| Lösungsmittel: | 30 Gew.-Teile | Dimethylformamid |
| Emulgator: | 1 Gew.-Teil | Polyoxyäthylen-Sorbitan-Monolaurat |

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Gerstepflanzen werden im Gewächshaus bis zum 2-Blatt-Stadium angezogen. In diesem Stadium werden die Pflanzen tropfnaß mit den Wirkstoffzubereitungen besprüht. Nach 3 Wochen wird der Zuwachs der behandelten Pflanzen mit dem Zuwachs der unbehandelten Kontrollpflanzen verglichen.

Die erfindungsgemäßen Wirkstoffe 1, 5, 11 und 32 verursachen in diesem Test eine wesentlich stärkere Wuchshemmung als die aus dem Stand der Technik bekannte Substanz B.

Beispiel G

*Wuchsförderung bei Baumwolle*

| | | |
|---|---|---|
| Lösungsmittel: | 30 Gewichtsteile | Dimethylformamid |
| Emulgator: | 1 Gewichtsteil | Polyoxyäthylen-Sorbitan-Monolaurat |

Zur Herstellung einer zweckmäßigen Wirkstoffzubereitung vermischt man 1 Gewichtsteil Wirkstoff mit den angegebenen Mengen Lösungsmittel und Emulgator und füllt mit Wasser auf die gewünschte Konzentration auf.

Baumwollpflanzen werden im Gewächshaus bis zur vollen Entfaltung des 5. Laubblattes angezogen. In diesem Stadium werden die Pflanzen tropfnaß mit den Wirkstoffzubereitungen besprüht. Nach 3 Wochen wird der Zuwachs der behandelten Pflanzen mit dem Zuwachs der unbehandelten Kontrollpflanzen verglichen.

Der erfindungsgemäße Wirkstoff 6 verursacht in diesem Test eine starke Förderung des Wachstums.

Herstellungsbeispiele

Beispiel 1

$$CN—CH_2—CO—O^{\ominus}K^{\oplus}$$

Zu einer Lösung von 113 g (1 Mol) $\alpha$-Isocyanoessigsäureäthylester in 750 ml Äther tropft man unter Kühlen und Rühren bei ca. 5°C innerhalb von 30 Minuten eine Lösung von 61,5 g (1,1 Mol) Kaliumhydroxid in 500 ml Äthanol. Man läßt anschließend noch 4 Stunden bei ca. 2—10°C nachrühren, saugt ab und entfernt die restlichen Lösungsmittelspuren unter Vakuum im Exsiccator. Es

werden 117 g (95% der Theorie) des Kalium-Salzes der $\alpha$-Isocyanoessigsäure in Form eines weißen Pulvers mit dem Schmelzpunkt 210°C (Zersetzung) isoliert.

Beispiel 2

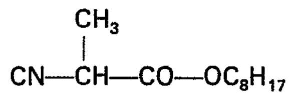

Zu einer Lösung von 6,3 g (50 mMol) $\alpha$-Isocyanopropionsäureäthylester und 6,5 g (50 mMol) Oktanol in 150 ml Toluol (p.A.) fügt man 0,12 g (5 mMol) Natriumhydrid, destilliert anschließend unter Normaldruck 50 ml Lösungsmittel ab, läßt abkühlen und versetzt die Reaktionsmischung mit 100 ml Wasser. Nach der Phasentrennung wird die organische Phase über Magnesiumsulfat getrocknet, filtriert und das Toluol im Vakuum am Rotationsverdamfer abdestilliert. Es verbleiben 10,2 g (97% der Theorie) $\alpha$-Isocyano-propionsäureoktylester in Form einer gelben Flüssigkeit mit dem Brechungsindex $n_D^{23}$ : 1,4439.

Analog Beispiel 1 bzw. 2 werden die in der folgenden Tabelle aufgeführten Verbindungen der Formel

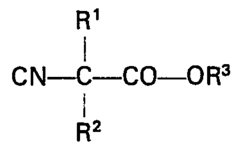

hergestellt:

| Beispiel Nr. | $R^1$ | $R^2$ | $R^3$ | Ausbeute (% der Theorie) | Schmelzpunkt; Brechungsindex; Siedepunkt [°C / Torr] |
|---|---|---|---|---|---|
| 3 | H | H | Na | 89 | 220 (Zersetzung) |
| 4 | $CH_3$ | $CH_3$ | $C_2H_5$ | 99 | 47 / 6 |
| 5 | H | H | $CH_3$ | 88 | 44 / 1 |
| 6 | H | H | 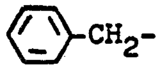 | 68 | 130 / 0,9 |
| 7 | $C_3H_7$-iso | H | $C_2H_5$ | 70 | 70 / 3 |
| 8 | $CH_3$ | $CH_2=CH-CH_2-$ | $C_2H_5$ | 92 | 85 / 10 |
| 9 | $CH_3$ | 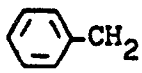 | $C_2H_5$ | 99 | $n_D^{20}$ : 1,5089 |
| 10 | $CH_3$ | $C_3H_7$-iso | $C_2H_5$ | 78 | 80 / 10 |
| 11 | $CH_3$ | $CO-OC_2H_5$ | $C_2H_5$ | 92 | $n_D^{20}$ : 1,4260 |
| 12 | H | H | $-CH_2-CO-OC_2H_5$ | 98 | $n_D^{20}$ : 1,4418 |
| 13 | $CH_3$ | $CH_3$ | $C_{10}H_{21}$ | 91 | $n_D^{20}$ : 1,4440 |
| 14 | $CH_3$ | $CH_3$ | $C_8H_{17}$ | 84 | $n_D^{20}$ : 1,4507 |
| 15 | $CH_3$ | $CH_3$ | $C_{12}H_{25}$ | 90 | $n_D^{20}$ : 1,4926 |
| 16 | $CH_3$ | $CH_3$ | $C_{14}H_{29}$ | 91 | $n_D^{20}$ : 1,4530 |
| 17 | $CH_3$ | H | $C_{10}H_{21}$ | 82 | $n_D^{20}$ : 1,4502 |
| 18 | $CH_3$ | H | $C_{12}H_{25}$ | 90 | $n_D^{20}$ : 1,4565 |
| 19 | $CH_3$ | H | $C_{14}H_{29}$ | 94 | $n_D^{20}$ : 1,4520 |
| 20 | H | H | $C_8H_{17}$ | 89 | $n_D^{20}$ : 1,4466 |
| 21 | $C_3H_7$-iso | H | $C_8H_{17}$ | 90 | $n_D^{20}$ : 1,4441 |
| 22 | $C_3H_7$-iso | H | $C_{10}H_{21}$ | 89 | $n_D^{20}$ : 1,4480 |
| 23 | $C_3H_7$-iso | H | $C_{12}H_{25}$ | 88 | $n_D^{20}$ : 1,4515 |
| 24 | $C_3H_7$-iso | H | $C_{14}H_{29}$ | 89 | $n_D^{20}$ : 1,4535 |
| 25 | $-CH_2-CH_2-$ | | $C_8H_{17}$ | 90 | $n_D^{20}$ : 1,4559 |
| 26 | $-CH_2-CH_2-$ | | $C_{10}H_{21}$ | 84 | $n_D^{20}$ : 1,4535 |
| 27 | $-CH_2-CH_2-$ | | $C_{12}H_{25}$ | 86 | $n_D^{20}$ : 1,4545 |
| 28 | $-CH_2-CH_2-$ | | $C_{14}H_{29}$ | 80 | $n_D^{20}$ : 1,4531 |

| Beispiel Nr. | $R^1$ | $R^2$ | $R^3$ | Ausbeute (% der Theorie) | Schmelzpunkt; Brechungsindex; Siedepunkt [°C/Torr] |
|---|---|---|---|---|---|
| 29 | $CH_3$ | $CH_3$ | $CH_3$ | 80 | $n_D^{20}$ : 1,4769 . |
| 30 | $CH_3$ | $CH_3$ | 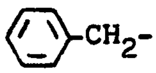 | 80 | $n_D^{20}$ : 1,5129 |
| 31 | $-CH_2-CH_2-$ | | 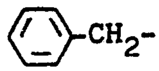 | 96 | $n_D^{20}$ : 1,5109 |
| 32 | $-CH_2-CH_2-$ | | $CH_3$ | 81 | $n_D^{20}$ : 1,4450 |
| 33 | $CH_3$ | $CH_3$ | $-CH_2-CO_2CH_3$ | 99 | $n_D^{20}$ : 1,4271 |

**Patentansprüche**

1. Mittel zur Regulierung des Pflanzenwachstums, gekennzeichnet durch einen Gehalt an mindestens einem $\alpha$-Isocyanocarbonsäurederivat der Formel

$$CN-\underset{R^2}{\overset{R^1}{\underset{|}{\overset{|}{C}}}}-CO-OR^3 \qquad (I)$$

in welcher
$R^1$ und $R^2$ welche gleich oder verschieden sein können für Wasserstoff, Alkyl mit 1 bis 6 Kohlenstoffatomen, Alkenyl mit 2 bis 4 Kohlenstoffatomen, Aryl mit 6 oder 10 Kohlenstoffatomen, Aralkyl mit 6 oder 10 Kohlenstoffatomen im Arylteil und 1 bis 4 Kohlenstoffatomen in Alkylteil, oder für Carbalkoxy mit 1 bis 4 Kohlenstoffatomen im Alkoxyteil stehen oder
$R^1$ und $R^2$ gemeinsam für eine Alkylenkette mit 2 bis 7 Kohlenstoffatomen stehen und
$R^3$ für Wasserstoff, Alkyl mit 1 bis 20 Kohlenstoffatomen, Aryl mit 6 oder 10 Kohlenstoffatom, Aralkyl mit 6 oder 10 Kohlenstoffatomen im Arylteil und 1 bis 4 Kohlenstoffatomen im Alkylteil, oder Carbalkoxyalkyl mit 1 bis Kohlenstoffatomen in der Oxyalkylgruppe steht und weiterhin,—wenn $R^1$ und $R^2$ Wasserstoff bedeuten—, für ein. Natrium- oder Kaliumion steht.

2. Verwendung von $\alpha$-Isocyanocarbonsäurederivaten gemäß Anspruch 1 zur Regulierung des Pflanzenwachstums.

3. Verfahren zur Herstellung von pflanzenwachstumsregulierenden Mitteln, dadurch gekennzeichnet, daß man $\alpha$-Isocyanocarbonsäurederivate gemäß Anspruch 1 mit Streckmitteln und/oder oberflächenaktiven Mitteln vermischt.

**Revendications**

1. Agents en vue de régler la croissance des plantes, caractérisés en ce qu'ils contiennent au moins un dérivé d'acide $\alpha$-isocyanocarboxylique de formule:

$$CN-\underset{R^2}{\overset{R^1}{\underset{|}{\overset{|}{C}}}}-CO-OR^3 \qquad (I)$$

dans laquelle

$R^1$ et $R^{21}$, qui peuvent être indentiques ou différents, représentent un atome d'hydrogène, un groupe alkyle contenant 1 à 6 atomes de carbone, un groupe alcényle contenant 2 à 4 atomes de carbone, un groupe aryle contenant 6 ou 10 atomes de carbone, un groupe aralkyle contenant 6 ou 10 atomes de carbone dans la fraction aryle et 1 à 4 atomes de carbone dans la fraction alkyle, ou encore un groupe carbalcoxy contenant 1 à 4 atomes de carbone dans la fraction alcoxy, ou

$R^1$ et $R^2$ pris ensemble representent une chaîne alkylène contenant 2 à 7 atomes de carbone, et

$R^3$ représente un atome d'hydrogène, un groupe alkyl contenant 1 à 20 atomes de carbone, un groupe aryle contenant 6 ou 10 atomes de carbone, un groupe aralkyle contenant 6 ou 10 atomes de carbone dans la fraction aryle et 1 à 4 atomes de carbone dans la fraction alkyle, ou encore un groupe carbalcoxyalkyle contenant 1 à 4 atomes de carbone dans le groupe oxyalkyle et, en outre, lorsque $R^1$ et $R^2$ représentent chacun un atome d'hydrogène, $R^3$ représente un ion sodium ou un ion potassium.

2. Utilisation de dérivés d'acides $\alpha$-isocyanocarboxyliques suivant la revendication 1 pour la régulation de la croissance des plantes.

3. Procédé de préparation d'agents de régulation de la croissance des plantes, caractérisé en ce qu'on mélange des dérivés d'acides $\alpha$-isocyanocarboxyliques suivant la revendication 1 avec des diluants et/ou des agents tensio-actifs.

**Claims**

1. A plant growth regulating composition characterised by a content of at least one $\alpha$-isocyanocarboxylic acid derivative of the formula

$$CN-\overset{\displaystyle R^1}{\underset{\displaystyle R^2}{\overset{|}{\underset{|}{C}}}}-CO-OR^3 \qquad (I)$$

in which

$R^1$ and $R^2$, which can be identical or different, represent hydrogen, alkyl with 1 to 6 carbon atoms, alkenyl with 2 to 4 carbon atoms, aryl with 6 to 10 carbon atoms aralkyl with 6 or 10 carbon atoms in the aryl part and 1 to 4 carbon atoms in the alkyl part, or carbalkoxy with 1 to 4 carbon atoms in the alkoxy part or

$R^1$ and $R^2$ together represent an alkylene chain with 2 to 7 carbon atoms and

$R^3$ represents hydrogen, alkyl with 1 to 20 carbon atoms, aryl with 6 or 10 carbon atoms, aralkyl with 6 or 10 carbon atoms in the aryl part and 1 to 4 carbon atoms in the alkyl part or carbalkoxyalkyl with 1 to 4 carbon atoms in the alkoxy group and furthermore—if $R^1$ and $R^2$ denote hydrogen—, a sodium ion or potassium ion.

2. The use of $\alpha$-isocyanocarboxylic acid derivatives according to claim 1 for regulating plant growth.

3. A process for the preparation of plant growth regulating compositions, characterised in that $\alpha$-isocyanocarboxylic acid derivatives according to claim 1 are mixed with extenders and/or surface-active agents.